# EUROPEAN PATENT APPLICATION

(11) **EP 1 170 100 A2**
(43) Date of publication of application: **09.01.2002**
(21) Application number: 00128229.2
(22) Date of filing: 27.12.2000
(51) Int. Cl.: B27C 5/00, B27M 1/08, B23D 45/10, B23Q 11/00

(54) **Apparatus for forming millings in wood beams, for the insertion of metallic beams and the like**

(30) Priority: 13.06.2000 IT MI201323
(71) Applicant: Cominotti Legnami S.n.c. di Cominotti Enrico & C., 25018 Montichiari (Brescia) (IT)
(72) Inventor: Cominotti, Enrico, 25018 Montichiari (Brescia) (IT)
(74) Representative: Modiano, Guido, Dr.-Ing.

(57) **Abstract**

An apparatus for forming millings in wood beams for the insertion of metallic beams, comprising a carriage (2) movable along rails (4) and adapted to support at least one milling cutter (18, 22) for forming a milling along a wood beam (10) which is arranged so as to be fixed between the rails (4), centrally with respect to the carriage (2), the at least one milling cutter (18, 22) being provided with means (45, 23) for adjusting its position with respect to the wood beam (10).

## Description

The present invention relates to an apparatus for forming millings in wood beams, for the insertion of metallic beams and the like.

Conventional wood beams are often used directly in view as a decorative element of a room at its ceiling, even though they do not have an actual supporting structural function.

The current trend is in fact to use iron beams to support roofs; however, said iron beams suffer the drawback that they are aesthetically unsightly.

Accordingly, wood beams which have a rectangular or square cross-section are usually used and a milling is performed in said beams so as to form a seat for the metallic beam, which is then inserted along the wood beam.

In this way, the support is provided by the metallic beam, which is tied to the walls of the room, while the wood beam that covers it externally is designed to allow the presence of a structural element such as a metallic beam to be aesthetically pleasant to the eye and also to contribute to the load-bearing capacity of the floor.

The tendency to renovate old buildings has led to the need to preserve the exposed wood beams that had originally been conceived for supporting functions. Since these beams must now be replaced because their wood is generally not in good conditions, such beams are replaced with the above-cited beams, which are also made of wood but inside which iron beams are inserted which thus provide support without however altering the original aesthetic appearance of the room to be renovated.

Manual systems are currently known for forming millings in said wood beams; however, such systems suffer the drawback that on the one hand they are very complicated and on the other hand, for example if it is necessary to insert T-shaped or H-shaped metallic beams, they require the provision of the millings along perpendicular planes in two or more machining steps.

This obviously entails considerably long manufacturing times, in addition to the fact that the operator must be absolutely certain of performing the cuts with a perfect mutual axial alignment, so that in a first machining pass during which one milling is performed the milling that is performed thereafter is exactly perpendicular to the previously performed milling.

This leads to significant difficulties in work and most of all requires highly specialized labor.

The aim of the present invention is to provide an apparatus for forming millings in wood beams for the insertion of metallic beams and the like which is able to perform the various millings in a single step.

Within this aim, an object of the present invention is to provide an apparatus for forming millings in wood beams for the insertion of metallic beams and the like in which said millings are performed not only in a single machining pass but also without the need to perform complicated centerings of the beam with respect to the milling cutters.

Another object of the present invention is to provide an apparatus for forming millings in wood beams which is simple to maintain.

Another object of the present invention is to provide an apparatus for forming millings in wood beams which allows to remove substantially most of the chips formed by the milling process so that said chips cannot scatter into the surrounding space.

Another object of the present invention is to provide an apparatus for forming millings in wood beams which is highly reliable, relatively simple to manufacture and at competitive costs.

This aim and these and other objects which will become better apparent hereinafter are achieved by an apparatus for forming millings in wood beams for the insertion of metallic beams, characterized in that it comprises a carriage movable along rails and adapted to support at least one milling cutter for forming a milling along a wood beam which is arranged so as to be fixed between said rails, centrally with respect to said carriage, said at least one milling cutter being provided with means for adjusting the position of said at least one milling cutter with respect to said wood beam.

Further characteristics and advantages of the present invention will become better apparent from the following detailed description of a preferred but not exclusive embodiment thereof, illustrated only by way of non-limitative example in the accompanying drawings, wherein:

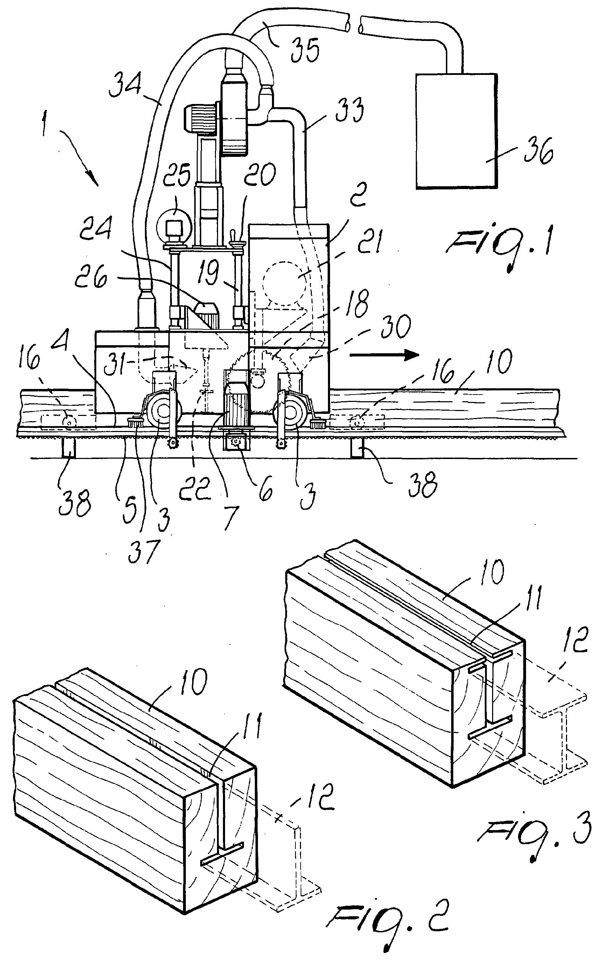

Figure 1 is a side elevation view of the apparatus according to the present invention;
Figure 2 is a partial perspective view of a wood beam, illustrating the insertion of a metallic beam;
Figure 3 is another perspective view of a wood beam, illustrating the insertion of a second type of metallic beam;
Figure 4 is a more detailed side elevation view of the apparatus according to the present invention;

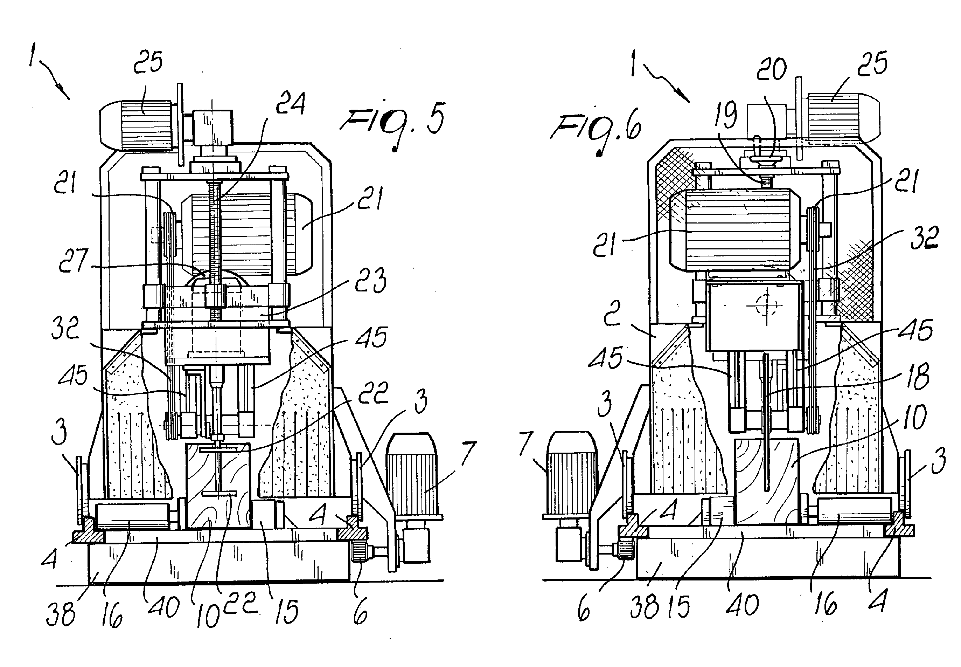

Figure 5 is a rear elevation view of the apparatus according to the present invention; and
Figure 6 is a front elevation view of the apparatus according to the present invention.

With reference to the figures, the apparatus according to the present invention, generally designated by the reference numeral 1, comprises a carriage 2 which can move by means of wheels 3 along two rails 4, for example by way of a rack-type actuation system, wherein the rack, designated by the reference numeral 5, is arranged below at least one of the rails, and a pinion 6 actuated by motor means 7 engages said rack in order to drive the wheels 3 along the rack.

The wheels 3 are driven by means of a supporting arm 8 which is rigidly coupled to the frame of the wheel and is provided with a sprocket 9 at one of its ends, which is located at the rack 5. The sprocket 9 thus engages the rack 5, and by actuation by means of the pinion 6 drives the wheels 3 of the carriage 2 along the rails 4.

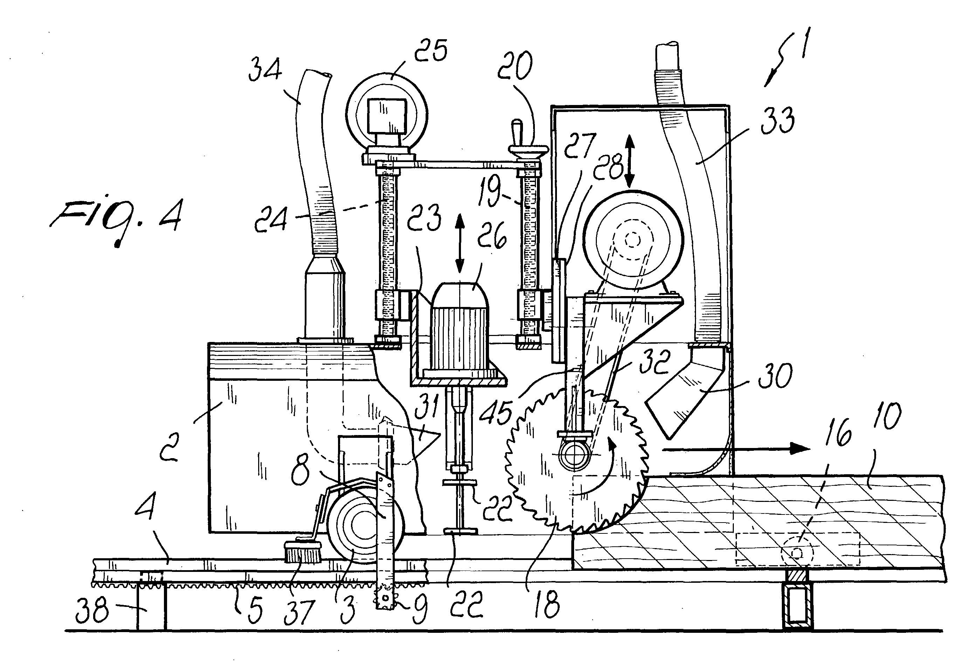

The carriage 2 is centrally open in order to allow passage over a wood beam 10 which is arranged in a fixed position between the rails and in which the millings are to be provided, as shown for example in Figures 2 and 3.

In detail, Figure 2 shows a milling 11 which is T-shaped so as to allow the insertion of a metallic beam 12 which has a similar cross-section.

Figure 3 instead illustrates a wood beam 10 with a milling 11 which is H-shaped for the insertion of a metallic beam 12 which has a similar cross-section.

The wood beam 10 is thus arranged centrally with respect to the carriage 2 and is locked in position by way of locking means which are conveniently provided for example by an abutment 15 which is fixed at one side of the wood beam 10 and by a piston 16 which can be adjusted so as to adapt to the different dimensions of the beam 10.

As an alternative, it is also possible to provide a pair of pistons in order to allow adjustment on both sides of the wood beam 10.

The carriage 2 supports a first vertical milling cutter 18 connected to an arm 45 which is vertically adjustable by means of the actuation of a worm screw 19. Actuation can be manual, by means of a handwheel 20, as shown in the figures, or can be, for example, motorized.

The rotation of the vertical milling cutter 18 is achieved by way of motor means 21 by means of a belt 32.

The vertical milling cutter 18 is suitable to provide, in the wood beam 10, the vertical milling that corresponds to the portion of the milling 11 of the T or H shown in Figures 2 and 3.

The worm screw 19 thus allows to vertically adjust the vertical milling cutter 18 in order to adjust the depth of the vertical milling 11.

In order to provide the horizontal millings, which are perpendicular to the milling provided by means of the vertical milling cutter 18, conveniently there is provided at least one horizontal milling cutter or, as shown in the figures, there are provided two horizontal milling cutters 22 which are also vertically adjustable by means of the translatory motion of a supporting arm 23 along a second worm screw 24. Also in this case, the adjustment can be motorized, by way of motor means 25, as shown in the figures, or can be manual by means of a handwheel which is similar to the handwheel 20.

The rotation of the horizontal milling cutters 22 is determined by motor means 26. In this way , with the carriage 2 movable along the rails 4, the vertical central milling cutter 18 performs the vertical milling, while the horizontal milling cutters 22 produce the horizontal millings, which are perpendicular to the preceding milling. The metallic beams 12 can then be inserted along the entire wood beam, since the carriage 2 which can move along the rails 4 allows the mills to perform the milling along the entire length of the wood beam 10.

Conveniently, the vertical milling cutter 18 can be set at an angle, by means of the rotation of a plate 28 which is rigidly coupled to the arm 19 that supports the milling cutter 18, with respect to a plate 27 which is rigidly coupled to the worm screw 19.

The rotation of the plate 28 with respect to the plate 27 allows to set the central milling cutter 18 at a selected angle with respect to the vertical axis that is perpendicular to the upper surface of the wood beam 10.

This allows to provide rounded portions at the upper end of the vertical milling for particular processes.

Conveniently, in order to aspirate the chips formed by the millings performed by means of the milling cutters 18 and 22, suction intakes 30 and 31 are respectively provided, being located at the milling cutters 18 and 22 and which, by means of hoses 33 and 34, allow to convey the chips to a common hose 35 which leads into a collection tank 36.

In order to keep the rails 4 clean, at least one of the wheels, and preferably each one of the wheels 3, has a brush 37 which is rigidly connected to the arm 8 and is moved along the rail, rubbing against it.

Conveniently, the carriage 2 and the rails 4 are supported by a footing 38 which allows to keep the rails 4 raised from the ground and therefore allows to position the pinion 6 under the rack 5 that is present on at least one the rails 4.

With reference to the figures, the operation of the apparatus according to the invention is as follows.

The wood beam 10 is positioned centrally with respect to the carriage 2, between the rails 4, on a supporting surface 40 which connects the rails 4 to each other and is supported by the footing or preferably by the pair of footings 38.

At this point, the wood beam 10 is rigidly locked in position by means of the fixed abutment 15 and the piston 16, and the carriage 2 is made to advance by acting on the rack 5 by means of the pinion 6.

The advancement of the carriage 2 along the rails 4 places the vertical milling cutter 18 in contact with the wood beam 10, and the actuation of the milling cutter by way of the motor means 21 and the belt 32 allows to perform the vertical milling along the entire length of the wood beam 10 or along the selected portion of the wood beam.

At this point, simultaneously with the vertical milling action performed by means of the milling cutter 18, the horizontal milling cutters 22 driven by the motor means 26 start to operate successively and synchronously and perform the horizontal millings, which are perpendicular in the millings formed by the vertical milling cutter 18.

In this way, all the millings required for the insertion of the metallic beam 12 in the wood beam 10 are provided with a single pass.

The position of the millings can be selected at will by the operator by acting on the worm screws 19 and 24, which respectively adjust the height of the vertical milling cutter 18 and of the horizontal milling cutter or cutters 22 with respect to the wood beam 10.

The suction intakes 30 and 31 allow to aspirate the chips formed by the milling operations as the millings are formed, thus allowing to keep the surrounding space substantially clean.

In practice it has been observed that the apparatus according to the present invention fully achieves the intended aim and objects, since it allows to perform all the milling operations required for the insertion of a metallic beam in a wood beam in a single pass, without machining downtimes, and with an apparatus which is not structurally complicated. The means for adjusting the position of the milling cutters with respect to the beam further allow to center the millings at will.

The apparatus thus conceived is susceptible of numerous modifications and variations, all of which are within the scope of the inventive concept; all the details may further be replaced with other technically equivalent elements.

In practice, the materials employed, so long as they are compatible with the specific use, as well as the dimensions, may be any according to requirements and to the state of the art.

The disclosures in Italian Patent Application No. MI2000A001323 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for forming millings in wood beams for the insertion of metallic beams, **characterized in that** it comprises a carriage movable along rails and adapted to support at least one milling cutter for forming a milling along a wood beam which is arranged so as to be fixed between said rails, centrally with respect to said carriage, said at least one milling cutter being provided with means for adjusting the position of said at least one milling cutter with respect to said wood beam.

2. The apparatus according to claim 1, **characterized in that** it comprises a vertical milling cutter and at least one horizontal milling cutter, both of said milling cutters being respectively connected to vertical adjustment means.

3. The apparatus according to claim 2, **characterized in that** said vertical milling cutter is actuated by motor means which are supported by said carriage by means of a belt.

4. The apparatus according to one or more of the preceding claims, **characterized in that** said at least one horizontal milling cutter is actuated by motor means which are supported by said carriage.

5. The apparatus according to one or more of the preceding claims, **characterized in that** at least one of said rails is provided with a rack which allows to move said carriage, at least one of the wheels of said carriage having an arm which is rigidly coupled thereto and is provided, at one end, with a sprocket which is adapted to engage said rack.

6. The apparatus according to one or more of the preceding claims, **characterized in that** it comprises motor means which are adapted to actuate a pinion which engages said rack.

7. The apparatus according to one or more of the preceding claims, **characterized in that** said means for adjusting said vertical milling cutter and said at least one horizontal milling cutter comprise a supporting arm adapted to perform a translatory motion along a worm screw actuated by movement means.

8. The apparatus according to one or more of the preceding claims, **characterized in that** said movement means comprise motor means.

9. The apparatus according to one or more of the preceding claims, **characterized in that** said movement means of said worm screws comprise a handwheel.

10. The apparatus according to one or more of the preceding claims, **characterized in that** it comprises means for aspirating chips produced during the milling operation which are arranged at said vertical milling cutter and at said at least one horizontal milling cutter.

11. The apparatus according to one or more of the preceding claims, **characterized in that** said aspiration means comprise an intake at each one of said milling cutters, said intake being connected to a flexible hose which conveys said chips to a collection tank.

12. The apparatus according to one or more of the preceding claims, **characterized in that** said vertical milling cutter can be set at an angle with respect to an axis which is perpendicular to said wood beam in order to provide rounded portions along the vertical milling.

13. The apparatus according to one or more of the preceding claims, **characterized in that** at least one of the wheels of said carriage, for each rail, is provided with a brush for cleaning said rail, said brush moving rigidly with said wheel.

14. The apparatus according to one or more of the preceding claims, **characterized in that** said rails are supported laterally to a supporting surface which is arranged on a pair of footings.
